(19) **Europäisches Patentamt European Patent Office Office européen des brevets**

(11) **EP 3 704 188 B1**

(12) **EUROPEAN PATENT SPECIFICATION**

(45) Date of publication and mention of the grant of the patent:
**17.01.2024   Bulletin 2024/03**

(21) Application number: **17804694.2**

(22) Date of filing: **31.10.2017**

(51) International Patent Classification (IPC):
**C08L 7/00** (2006.01)      **C08L 9/00** (2006.01)

(52) Cooperative Patent Classification (CPC):
(C-Sets available)
**B60C 1/00; C08L 7/00; C08L 9/00;** B60C 2001/005;
B60C 2015/0614; B60C 2200/06      (Cont.)

(86) International application number:
**PCT/US2017/059161**

(87) International publication number:
**WO 2019/088986 (09.05.2019 Gazette 2019/19)**

(54) **TIRE BEAD COMPONENT**

REIFENWULSTBAUTEIL

COMPOSANT DE TALON DE PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.09.2020   Bulletin 2020/37**

(73) Proprietor: **Compagnie Générale des Etablissements Michelin**
**63000 Clermont-Ferrand (FR)**

(72) Inventors:
• **WINSTON, Paul B.**
**Greenville, SC 29605 (US)**
• **BLASUCCI, Vittoria**
**Greenville, SC 29605 (US)**

(74) Representative: **Casalonga**
**Casalonga & Partners**
**Bayerstraße 71/73**
**80335 München (DE)**

(56) References cited:
EP-A1- 2 878 458        EP-A1- 3 040 212
US-A1- 2014 000 780     US-A1- 2015 352 910

• **DATABASE WPI Week 201308 Thomson Scientific, London, GB; AN 2012-P45233 XP002782823, & KR 2012 0117629 A (SUMITOMO RUBBER IND LTD) 24 October 2012 (2012-10-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08K 3/04, C08K 5/17,
C08L 61/06, C08K 3/06, C08K 5/0025;
C08L 7/00, C08L 9/00, C08K 3/04, C08K 5/3477,
C08L 61/06, C08K 3/06, C08K 5/0025;
C08L 9/00, C08L 7/00, C08K 3/04, C08K 5/17,
C08L 61/06, C08K 3/06, C08K 5/0025;
C08L 9/00, C08L 7/00, C08K 3/04, C08K 5/3477,
C08L 61/06, C08K 3/06, C08K 5/0025**

**Description**

BACKGROUND OF THE INVENTION

Field of the Invention

This invention relates generally to tire components of the bead section and more specifically, to rubber compositions useful for forming these components.

Description of the Related Art

Pneumatic tires typically have a pair of spaced apart bead portions, such as those described in EP 3 040 212 and in KR 2012-0117629. that include a bead core that is usually made of relatively inextensible metallic wires surrounded by a rubber component. A pair of opposing sidewalls portions connect with a crown portion. The crown portion typically includes one or more belt plies and a tread band. The body ply of such a tire, also referred to sometimes as the carcass or carcass ply, extends from the bead portions, through both opposing sidewall portions and the crown portion of the tire. The carcass ply or carcass plies if there is more than one, are made of cords coated with a rubber composition. The carcass constrains the inflation pressure of the tire and helps determine the overall shape of the tire upon inflation.

Since pneumatic tires are mounted on metal rims, tire designers must provide a tire having a bead area that is robust and that can withstand the forces necessary to mount and dismount a tire on the wheel rim. Especially for heavy truck tires, that are designed with carcasses that can be retreaded and have a much longer life than tires that are not designed for retreading, the rubber compounds used in the bead mounting area of the tire need to be protected from the repeated forces they undergo during mounting and remounting and during their normal service while mounted.

It is known in the industry to provide a chafer, for example, as described in EP 2 878 458, which is an additional rubber layer, to provide additional protection of the tire in the bead area where the tire makes contact with the wheel. Often the chafer is reinforced with a woven fabric or metallic cable to help it hold its shape. However, such additional tire components increase the cost and weight of the tire.

EP 2 878 458 also describes a toe guard combined with a chafer, which constitute a rubber chafer portion. Said chafer and toe guard are formed from different rubber compositions.

SUMMARY OF THE INVENTION

Particular embodiments of the inventions disclosed herein include a tire having a pair of opposing bead portions, a pair of opposing sidewall portions connected to the opposing bead portions, a crown portion connecting the opposing sidewall portions and at least one carcass extending between the bead portions and through the sidewall and crown portions. Such embodiments further include a pair of toe guards positioned around at least a radially-innermost section of each of the bead portions and extending radially outward toward the sidewall portions. These toe guards are formed of a rubber composition that is based on a cross-linkable rubber composition having, in parts by weight per 100 parts by weight of rubber (phr), between 40 phr and 70 phr of natural rubber and between 30 phr and 60 phr of a synthetic rubber component.

The synthetic rubber component may be selected from the group consisting of a polybutadiene rubber (BR), a styrene butadiene rubber (SBR), a polyisoprene rubber (IR) and combinations thereof. However, the synthetic rubber component includes an amount of BR that is between 25 wt% and 100 wt% of the total weight of the synthetic rubber component.

Particular embodiments of the inventions disclosed herein further include a reinforcing filler, a methylene donor and a methylene acceptor reinforcing resin system and a sulfur curing system comprising sulfur and one or more accelerators, wherein a ratio by weight of the sulfur to the one or more accelerators is less than 1.

The foregoing and other objects, features and advantages of the invention will be apparent from the following more detailed descriptions of particular embodiments of the invention, as illustrated in the accompanying drawing wherein like reference numbers represent like parts of the invention.

BRIEF DESCRIPTION OF THE DRAWINGS

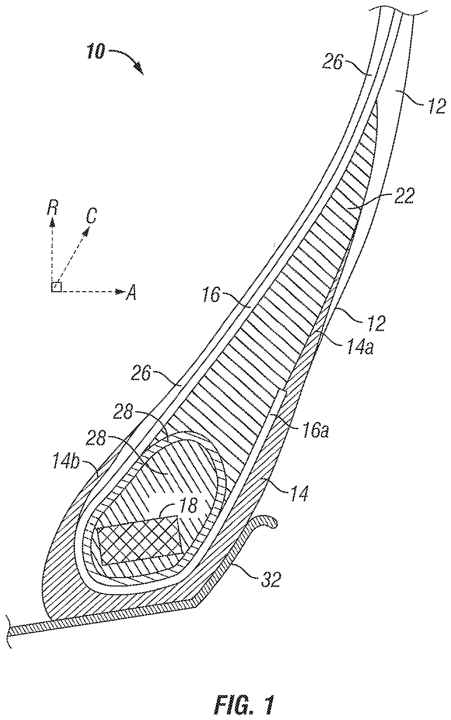

FIG. 1 provides a schematic cross-sectional view of a bead portion of a pneumatic tire showing a toe guard.

DETAILED DESCRIPTION OF PARTICULAR EMBODIMENTS

Embodiments of the present invention include pneumatic tires for vehicles having toe guards positioned around the radially outermost section of each of the bead portions of the tire. The toe guards provide, *inter alia*, protection against the forces inflicted on the bead sections upon mounting and demounting the tire from a wheel rim. Advantageously, the toe guards disclosed herein provide tire protection without the need for additional tire components, such as a chafer that can increase the weight and rolling resistance of the tire and result in a deleterious effect on fuel economy. Therefore particular embodiments of the tires disclosed herein do not include a chafer and may only include the toe guard in the tire bead area making contract with the wheel rim.

It has been found that by forming the toe guard of a tire with the rubber compositions disclosed herein, the robustness of the toe guard can be improved to provide less likelihood that a tire will be damaged during a mounting or demounting operation. Especially for tires that have a long expected life, such as those that are designed to be retreaded one or more times, the rubber compositions of those tires forming tire components that are exposed to the environment, age over time and become less pliable. Particular embodiments of the rubber compositions disclosed herein include improved characteristics that, *inter alia*, decrease the risk of damaging or cracking the toe guard compositions during mounting and demounting operations; e.g., reducing the high strain (100%) modulus while maintaining the low strain (10%) modulus.

For example, it is desirable in particular embodiments for the toe guard rubber compositions to have a modulus of elongation at 10% strain (MA10) to be between 5 MPa and 10 MPa or alternatively between 6.5 MPa and 9 MPa or between 7 MPa and 8 MPa, which is a desirable range for the material when the tire is in operation mounted on the rim and subjected to lower strain. During normal operation when the tire is mounted on the rim, the strain on the toe guard is low and it is therefore desirable to have a higher modulus at low strain. However, when the tire is being mounted and dismounted, it is desirable to have a lower modulus of elongation at high strain. For that condition, the modulus of elongation at 100% strain (MA100) may be, for example, between 1 MPa and 2.5 MPa or alternatively between 1.3 MPa and 2.5 MPA or between 1.5 MPA and 2 MPA, since the strain on the toe guard is high during mounting and dismounting operations.

Reference will now be made in detail to embodiments of the invention, one or more examples of which are illustrated in the drawings. Each example is provided by way of explanation of the invention. For example, features illustrated or described as part of one embodiment can be used with another embodiment to yield still a third embodiment. It is intended that the present invention include these and other modifications and variations.

The following terms are defined as follows for this disclosure:
"Axial direction" or the letter "A" in the figure refers to a direction parallel to the axis of rotation of for example, the tire and/or wheel as it travels along a road surface.

"Radial direction" or the letter "R" in the figure refers to a direction that is orthogonal to the axial direction and extends in the same direction as any radius that extends orthogonally from the axial direction.

"Equatorial plane" means a plane that passes perpendicular to the axis of rotation and bisects the outer tread band and/or wheel structure.

"Circumferential direction" or the letter "C" in the figure refers to a direction that is orthogonal to the axial direction and orthogonal to a radial direction.

"phr" means parts per hundred parts of rubber by weight " and is a common measurement in the art wherein components of a rubber composition are measured relative to the total weight of rubber in the composition, *i.e.*, parts by weight of the component per 100 parts by weight of the total rubber(s) in the composition.

"Based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

FIG. **1** provides a schematic cross-sectional view of a bead portion of a pneumatic tire showing a toe guard. The bead portion **10** of a pneumatic tire anchors the tire to the wheel rim **32** and typically includes, for example, the bead core **18** that is formed of relatively inextensible metallic wires surrounded by one or more rubber components **28**. The apex **22** provides enhanced stiffness in the lower sidewall **12** of the tire. The inner liner **26** is a rubber component typically manufactured from a butyl rubber composition that covers the interior surface of the tire and helps retain the inflation air inside the tire. The carcass **16** wraps around the bead core **18** and turns up, terminating as the turned-up portion **16a** of the carcass.

The toe guard **14** is positioned at the radially-innermost section of the bead portion **10** on the exterior of the tire. The toe guard is intended for contacting the rigid rim **32** of a wheel. The radially outer end **14a** of the toe guard **14** is position axially at the outer surface of the tire and extends radially outward to the sidewall **12**. In the embodiment shown, the end of the sidewall **12** covers the radial outer end **14a** of the toe guard **14**. On the interior side of the tire, the radially outer end **14b** of the toe guard **14** is positioned axially at the inner surface of the tire and extends radially outward towards the inner liner **26**. In the embodiment shown, the radially outer end **14b** of the toe guard **14** covers the end of the inner liner **26**. In other embodiments the sidewall **12** for example, may be covered by the radial outer end of the toe guard and/or the inner liner **26** may cover the radially outer end of the toe guard.

As noted above, in particular embodiments of pneumatic tires having toe guards disclosed herein, it is only the toe guard that makes contact with the wheel rim with no other tire exterior component is provided, such as a chafer, intended for contacting the rigid rim of the wheel. In some embodiments, there may be a chafer, not shown in FIG. 1, between the toe guard and the turned-up portion **16a** of the carcass. The exemplary embodiment shown in FIG. **1** is not meant to limit the invention to just the embodiment presented since one skilled in the art will recognize that the bead core arrangement, the apex, the other rubber components and their arrangements, the arrangement of the toe guard ends with the ends of the sidewall and inner liner and the addition of other tire components or the removal of some of those shown are only for demonstration and can be varied by the tire designer to suit a particular design requirement.

The thickness of the toe guard may be typically, for example, between 1 mm and 5 mm or alternatively between 2 mm and 4 mm. The placement of the toe guard is, in particular embodiments, placed so that no other rubber component of the tire makes contact with the wheel rim when the tire is mounted on the rim. In other words, only the toe guard of the tire should contact the wheel rim. Therefore, the toe guard may extend, for example, about 70 mm up the side of the sidewall as measured from the toe and about 40 mm up the inner liner as measure from the toe.

As noted above, the rubber compositions disclosed herein are useful for forming the toe guards of pneumatic tires and are particularly useful in some embodiments for the toe guards on heavy vehicle tires, including heavy trucks, buses and the like. Particular embodiments of the toe guards disclosed herein are formed of a rubber composition that is based upon a cross-linkable rubber composition having rubber components that include natural rubber (NR) and polybutadiene rubber (BR). In particular embodiments, a portion of the BR may be replaced with polyisoprene rubber (IR), styrene butadiene rubber (SBR) or combinations thereof. Particular embodiments may include no SBR, other embodiments may include no IR and yet other embodiments may include no IR or SBR and only contain NR and BR. Particular embodiments may include no other rubber components other than those indicated above.

Examples of useful polyisoprene rubber include synthetic *cis*-1,4 polyisoprene, which may be characterized as possessing *cis*-1,4 bonds at more than 90 mol.% or alternatively, at more than 98 mol.%. Examples of useful SBR copolymers include, for example, those having a styrene content of between 1 wt% and 50 wt% or of between 20 wt% and 40 wt% or between 2 wt% and 35 wt% and in the butadiene faction, a content of 1,2-bonds of between 4 mol% and 65 mol%, a content of trans-1,4 bonds of between 20 mol% and 80 mol%. Examples of useful BR include those having a content of 1,2- units of between 4 mol. % and 80 mol. % or those having a cis-1,4 content of more than 80 mol. %. Natural rubber, polyisoprene rubber, styrene butadiene rubber and polybutadiene rubber are all used extensively in the tire field and are well known to those having ordinary skill in the art.

Particular embodiments of the rubber compositions disclosed herein useful for the toe guard include between 40 phr and 70 phr of natural rubber or alternatively between 45 phr and 65 phr or between 45 phr and 55 phr of natural rubber.

Particular embodiments may further include between 30 phr and 60 phr of polybutadiene or alternatively between 35 phr to 55 phr or between 45 phr and 55 phr of polybutadiene. There are embodiments of the rubber compositions disclosed herein useful for the toe guard of a tire that include no other rubber components than natural rubber and polybutadiene rubber.

In particular embodiments, in addition to the natural rubber, the rubber compositions disclosed herein may include between 30 phr and 60 phr of a synthetic rubber component or alternatively between 35 phr to 55 phr or between 45 phr and 55 phr of the synthetic rubber component, wherein the synthetic rubber component is selected from BR, IR, SBR or combinations thereof, wherein the synthetic rubber component includes an amount of BR that is between 25 wt% of the total weight of the synthetic rubber component and 100 wt% or alternatively between 50 wt% and 95 wt%, between 75 wt% and 90 wt%, between 85 wt% and 90 wt%, between 50 wt% and 100 wt%, between 75 wt% and 100 wt% or between 85 wt% and 100 wt% of the total weight of the synthetic rubber component. For example, if there is a rubber composition having 60 phr of the synthetic rubber component with 50 wt% of it as BR, then there is 30 phr of BR in the rubber composition and 30 phr of the other rubber components making up the synthetic rubber component.

In addition to the rubber components disclosed above, particular embodiments of the rubber compositions disclosed herein further include a methylene acceptor/methylene donor reinforcing resin system. Such systems include at least one methylene acceptor and at least one methylene donor. These reinforcing resin systems are well known in the art and are added to rubber compositions to increase the rigidity of the rubber compositions. Reinforcing resins intermix with the rubber polymer chains and, when reacted with a linking agent, form a three-dimensional network that improves the physical characteristics of the cured rubber composition, especially the rigidity at low strains, *e.g.*, at < 20% strain. Advantageously these reinforcing resin systems can significantly increase the MA10 modulus of elongation at low (10%) strain while having minimal effect on the MA100 modulus of elongation at high (100%) strain.

Examples of useful methylene acceptors include phenols, the generic name for hydroxylated derivatives of benzene and equivalent compounds. This definition covers in particular monophenols, for example phenol or hydroxybenzene, bisphenols, polyphenols (polyhydroxyarenes), substituted phenols such as alkylphenols or aralkylphenols, for example bisphenols, diphenylolpropane, diphenylolmethane, naphthols, cresol, t-butylphenol, octylphenol, nonylphenol, xylenol, resorcinol or analogous products and 3-hydroxydiphenylamine (3-HDPA) and/or 4-hydroxydiphenylamine (4-HDPA).

Useful methylene acceptors for particular embodiments are the novolac resins. These resins are phenol-aldehyde pre-condensates resulting from the condensation of phenolic compounds and aldehydes, for example formaldehyde. Novolac resins (also referred to as "two-step resins") require the use of a methylene donor as a curing agent to crosslink the novolac resins in the rubber composition just as do the other methylene acceptors. Such crosslinking thereby creates the three dimensional resin networks. Such curing normally takes place above 100 °C. An example of a suitable novolac resin is available from the SI Group with offices in Schenectady, NY under the product name HRJ-12952. This novolac resin has a density of 1.25 g/cm$^3$ and a melting point of 100 °C with less than 1% of unreacted phenol.

Particular embodiments of the rubber compositions disclosed herein include the methylene acceptor selected from a novolac resins, diphenylolmethane, diphenylolethane, diphenylolpropane, diphenylolbutane, a naphthol, a cresol or combinations thereof. Any of the methylene acceptors disclosed herein or that are otherwise known to those skilled in the art to be suitable for the purpose may be used in particular embodiments of the rubber compositions either singularly or in combination. Particular embodiments of useful rubber compositions may be limited to novolac resins as the useful methylene acceptor.

Suitable methylene donors may be selected from, for example, hexamethylenetetramine (HMT); hexamethoxymethylmelamine (HMMM); formaldehyde; paraformaldehyde; trioxane; 2-methyl-2-nitro-1-propanal; substituted melamine resins such as N-substituted oxymethylmelamine resins; glycoluril compounds such as tetramethoxymethyl glycoluril; urea-formaldehyde resins such as butylated urea-formaldehyde resins; or mixtures thereof. Hexamethylenetetramine (HMT), hexamethoxymethylmelamine (HMMM) or mixtures thereof are preferred methylene donors in particular embodiments.

The amount of methylene acceptor added to the rubber compositions disclosed herein may range, for example, from between 1 phr and 6 phr or alternatively between 1 phr and 5 phr, between 1 phr and 4 phr or between 1 phr and 3 phr. The ratio of the methylene acceptor to the methylene donor may range between 10:1 and 1:10 or alternatively between 5:1 and 2:1 or between 4:1 and 2:1.

In addition to the rubber components and the reinforcing resin system disclosed above, particular embodiments of the rubber compositions useful for the toe guards disclosed herein further includes a reinforcing filler. Reinforcing fillers are well known in the art and include, for example, carbon blacks and silica. Any reinforcing filler known to those skilled in the art may be used in the rubber composition either by themselves or in combination with other reinforcing fillers. In particular embodiments of the rubber composition disclosed herein, the filler is essentially carbon black.

Carbon black, which is an organic filler, is well known to those having ordinary skill in the rubber compounding field. The carbon black included in particular embodiments of the rubber compositions disclosed herein may range between 40 phr and 100 phr or alternatively between 40 phr and 80 phr, between 50 phr and 80 phr or between 60 phr and 70 phr.

Suitable carbon blacks are any carbon blacks known in the art and suitable for the given purpose. Particular embodiments may include carbon blacks having a surface area of between 70 m$^2$/g and 120 m$^2$/g or alternatively, between 100 m$^2$/g and 120 m$^2$/g or between 70 m$^2$/g and 99 m$^2$/g. The ranges for the N200 series of blacks and the N300 series of blacks are provided in ASTM Carbon blacks having a range of NSA in accordance with ASTM D-6556 Examples of useful carbon blacks include the N234, N299, N326, N330, N339, N343, N347, N375 carbon blacks.

As noted above, silica may also be useful as reinforcement filler. The silica may be any reinforcing silica known to one having ordinary skill in the art including, for example, any precipitated or pyrogenic silica having a BET surface area and a specific CTAB surface area both of which are less than 450 m$^2$/g or alternatively, between 30 and 400 m$^2$/g may be suitable for particular embodiments based on the desired properties of the cured rubber composition. Particular embodiments of rubber compositions disclosed herein may include a silica having a CTAB of between 80 and 200 m$^2$/g, between 100 and 190 m$^2$/g, between 120 and 190 m$^2$/g or between 140 and 180 m$^2$/g. The CTAB specific surface area is the external surface area determined in accordance with Standard AFNOR-NFT-45007 of November 1987.

Highly dispersible precipitated silicas (referred to as "HDS") may be useful in particular embodiments of such rubber compositions disclosed herein, wherein "highly dispersible silica" is understood to mean any silica having a substantial ability to disagglomerate and to disperse in an elastomeric matrix. Such determinations may be observed in known manner by electron or optical microscopy on thin sections. Examples of known highly dispersible silicas include, for example, Perkasil KS 430 from Akzo, the silica BV3380 from Degussa, the silicas Zeosil 1165 MP and 1115 MP from Rhodia, the silica Hi-Sil 2000 from PPG and the silicas Zeopol 8741 or 8745 from Huber.

When silica is added to the rubber composition, a proportional amount of a silane coupling agent is also added to the rubber composition. The silane coupling agent is a sulfur-containing organosilicon compound that reacts with the silanol groups of the silica during mixing and with the elastomers during vulcanization to provide improved properties of the cured rubber composition. A suitable coupling agent is one that is capable of establishing a sufficient chemical and/or physical bond between the inorganic filler and the diene elastomer; which is at least bifunctional, having, for example, the simplified general formula "Y-T-X", in which: Y represents a functional group ("Y" function) which is capable of bonding physically and/or chemically with the inorganic filler, such a bond being able to be established, for example, between a silicon atom of the coupling agent and the surface hydroxyl (OH) groups of the inorganic filler (for example, surface silanols in the case of silica); X represents a functional group ("X" function) which is capable of bonding physically and/or chemically with the diene elastomer, for example by means of a sulfur atom; T represents a divalent organic group making it possible to link Y and X.

Any of the organosilicon compounds that contain sulfur and are known to one having ordinary skill in the art are useful for practicing embodiments of the present invention. Examples of suitable silane coupling agents having two atoms of silicon in the silane molecule include 3,3'-bis(triethoxysilylpropyl) disulfide and 3,3'-bis(triethoxy-silylpropyl) tetrasulfide (known as Si69). Both of these are available commercially from Degussa as X75-S and X50-S respectively, though not in pure form. Degussa reports the molecular weight of the X50-S to be 532 g/mole and the X75-S to be 486 g/mole. Both of these commercially available products include the active component mixed 50-50 by weight with a N330 carbon black. Other examples of suitable silane coupling agents having two atoms of silicon in the silane molecule include 2,2'-bis(triethoxysilylethyl) tetrasulfide, 3,3'-bis(tri-t-butoxy-silylpropyl) disulfide and 3,3'-bis(di t-butylmethoxysilylpropyl) tetrasulfide. Examples of silane coupling agents having just one silicon atom in the silane molecule include, for example, 3,3'(triethoxysilylpropyl) disulfide and 3,3' (triethoxy-silylpropyl) tetrasulfide. The amount of silane coupling agent can vary over a suitable range as known to one having ordinary skill in the art. Typically the amount added is between 7 wt. % and 15 wt. % or alternatively between 8 wt. % and 12 wt. % or between 9 wt. % and 11 wt. % of the total weight of silica added to the rubber composition.

In addition to the rubber components, the reinforcing resin system and the reinforcement fillers disclosed above, particular embodiments of the rubber compositions useful for the toe guards disclosed herein further include a sulfur curing system comprising sulfur and one or more accelerators. In particular embodiments, the curing system is an efficient curing system, *i.e.*, the ratio by weight of sulfur to the accelerators is less than 1. Particular embodiments may have a ratio of sulfur to accelerators having a range of between 0.1 and 0.8, between 0.15 and 0.6, between 0.2 and 0.5 or between 0.3 and 0.4. In a rubber composition that includes silica, diphenyl guanidine (DPG) is often added so that the reaction between the silane coupling agent yet still acts as an accelerator and would be taken into account with the sulfur to accelerator ratio.

As known by those skilled in the art, sulfur may take the form of free sulfur, insoluble sulfur, soluble sulfur and/or provided by a sulfur donor. Sulfur donors, as known in the art, contribute sulfur to the curing process. An example of a sulfur donor is caprolactam disulfide, which is sold under the trade name RHENOGRAN CLD-80 by Lanxess. In particular embodiments, sulfur may be added in an amount ranging between 0.3 and 3 phr or alternatively between 0.5 phr and 2 phr or between 0.5 and 1.5 phr.

Accelerators are well known and typically are chosen from the basic families of accelerators based on their speed of vulcanization: guanidines (medium) such as diphenyl guanidine (DPG); thiazoles (semi-fast) such as 2-mercaptobenzothiazole (MBT) and 2-mercaptobenzothiazyl disulfide (MBTS); sulphenamides (fast) such as N-cyclohexyl-2-benzothiazolesulphenamide (CBS), N,N-dicyclohexyl-2-benzothiazolesulphenamide (DCBS) and N-tert-butyl-2-benzothiazole-sulphenamide (TBBS); thiurams (very fast) such as tetramethylthiuram monosulfide (TMTM); and dithiocarbamates (super-fast) such as zinc dimethyldithiocarbamate (ZDMC) and zinc diethyldithiocarbamate (ZDEC).

The vulcanization system may further include various known vulcanization activators, such as zinc oxide and stearic acid.

Other additives can be added to the rubber compositions disclosed herein as known in the art. Such additives may include, for example, some or all of the following: antidegradants, antioxidants, fatty acids, waxes, stearic acid and zinc oxide. Examples of antidegradants and antioxidants include 6PPD, 77PD, IPPD, DAPD and TMQ and may each be added to rubber compositions in an amount, for example, of from 0.5 phr and 7 phr. Zinc oxide may be added in an amount, for example, of between 1 phr and 6 phr or alternatively, of between 1.5 phr and 4 phr. Stearic acid may be added in an amount, for example, of between 1 phr and 4 phr or alternatively between 1 phr and 2 phr. Waxes may be added in an amount, for example, of between 0.5 phr and 5 phr or alternatively between 0.5 phr and 1.5 phr.

In particular embodiments of the rubber composition, in addition to the elastomers, reinforcing fillers, reinforcing resin systems, sulfur and accelerators disclosed above, particular amounts of the protection system may include, for example between 5 phr and 10 phr of antioxidants. An example of one embodiment of the rubber composition may include between 5 phr and 6 phr of 6PPD and between 3 phr and 5 phr of TMQ.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120° C and 190° C, more narrowly between 130° C and 170° C, is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically between 1 and 30 minutes, for example between 2 and 10 minutes) and at a sufficiently low temperature lower than the vulcanization temperature of the mixture, so as to protect against premature vulcanization.

The rubber compositions can then be formed into useful articles, including tire components such as the toe guard of a tire, and cured.

The invention is further illustrated by the following examples, which are to be regarded only as illustrations and not delimitative of the invention in any way. The properties of the compositions disclosed in the examples were evaluated as described below and these utilized methods are suitable for measurement of the claimed properties of the claimed invention.

Modulus of elongation (MPa) was measured at 10% (MA10) or 100% (MA100) at a temperature of 23 °C based on ASTM Standard D412 on dumb bell test pieces. The measurements were taken in the second elongation; *i.e.*, after an accommodation cycle. These measurements are secant moduli in MPa, based on the original cross section of the test piece.

The elongation property was measured as elongation at break (%) and the corresponding elongation stress (MPa), which is measured at 23 °C in accordance with ASTM Standard D412 on ASTM C test pieces.

The tear resistance indices are measured at 23 °C. The breaking load (FRD) is in N/mm of thickness and the elongation at break (ARD) in percentage are measured on a test piece of dimensions 10 x 142 x 2.5 mm notched with 3 notches that each have a depth of 3 mm. The tear resistance index is then provided by the following equation:

$$TR = (FRD * ARD) / 100.$$

To determine aged properties, samples are first aged for 28 days at 77 °C.

Example **1**

Rubber compositions were prepared using the components shown in Table 1. The amount of each component making up the rubber compositions are provided in parts per hundred part of rubber by weight (phr).

The carbon black was N299 having a surface area of 105 m$^2$/g (surface areas being NSA in accordance with ASTM D-6556). The methylene acceptor was a formophenloic resin from SI Group HRJ 12952 and the methylene donor was hexamethylenetetramine (HMT). The sulfur was element sulfur and the accelerator was CBS. The protection system included wax, 6PPD and TMQ. The SBR had a styrene content of 26%.

The rubber formulations were prepared by mixing the components given in Table **1**, except for the accelerators and sulfur, in a Banbury mixer until a temperature of between 110 °C and 170 °C was reached. The accelerators and sulfur were added in the second phase on a mill. Vulcanization was effected at 150 °C for 25 minutes. The formulations were then tested to measure their properties, the results of which are shown in Table **2**.

Table **1** - Formulations

|  | W1 | W2 | W3 | F1 | F2 |
|---|---|---|---|---|---|
| **Components** |  |  |  |  |  |
| NR | 50 | 25 | 50 | 50 | 50 |
| BR | 50 | 75 | 25 | 50 | 50 |
| SBR |  |  | 25 |  |  |
| N299 | 60 | 65 | 60 | 60 | 60 |
| Process Oil | 2 | 4 |  | 2 | 2 |
| Methylene acceptor | 0 | 0 | 0 | 2 | 4 |
| HMT | 0 | 0 | 0 | 0.64 | 1.28 |
| Stearic Acid | 1.5 | 3 | 3 | 1.5 | 1.5 |
| Zinc Oxide | 4 | 4 | 4 | 4 | 4 |

(continued)

|  | W1 | W2 | W3 | F1 | F2 |
|---|---|---|---|---|---|
| **Components** | | | | | |
| 6PPD | 5.5 | 3 | 3 | 5.5 | 5.5 |
| TMQ | 3.5 | 2 | 2 | 3.5 | 3.5 |
| Wax | 1 | 1 | 1 | 1 | 1 |
| Accelerator | 1.8 | 1.3 | 1.5 | 1.8 | 1.8 |
| Sulfur | 0.6 | 1.3 | 0.5 | 0.6 | 0.6 |
| S/A ratio, by weight | 0.33 | 1 | 0.33 | 0.33 | 0.33 |

As can be seen from Table 2, carbon black can be used to increase the MA10 rigidity but, as can be seen between W1 and W2, it also increases the MA100 rigidity. However, using the reinforcing resin system provides an increased MA10 rigidity without a significant increase in the MA100 rigidity.

Table **2** - Physical Properties

|  | W1 | W2 | W3 | F1 | F2 |
|---|---|---|---|---|---|
| **Physical Properties** | | | | | |
| MA10, MPa | 5.2 | 7.42 | 6.1 | 7.34 | 8.2 |
| MA10 aged, MPa | 8.3 | 12.1 | 8.8 | 9.78 | 12.8 |
| MA100, MPa | 1.7 | 2.6 | 1.7 | 1.69 | 1.7 |
| MA100 aged, MPa | - | 4.8 | - | 2.58 | - |
| Strain at Break @ 23 °C , % | 573 | 447 | 618 | 564 | 564 |
| Strain at Break aged @ 23 °C , % | - | 250 | - | 405 | - |

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A tire defining a radial direction, an axial direction and a circumferential direction, the tire comprising:

   a pair of opposing bead portions;
   a pair of opposing sidewall portions connected to the opposing bead portions;
   a crown portion connecting the opposing sidewall portions;
   at least one carcass extending between the bead portions and through the sidewall and crown portions; and

a pair of toe guards positioned around at least a radially-innermost section of each of the bead portions and extending radially outward toward the sidewall portions, wherein the toe guards are formed of a rubber composition based upon a cross-linkable rubber composition, the cross-linkable rubber composition comprising, in parts by weight per 100 parts by weight of rubber (phr):

between 40 phr and 70 phr of natural rubber;
between 30 phr and 60 phr of a synthetic rubber component selected from the group consisting of a polybutadiene rubber (BR), a styrene butadiene rubber (SBR), a polyisoprene rubber (IR) and combinations thereof, wherein the synthetic rubber component includes the BR in an amount that is between 25 wt% and 100 wt% of the total weight of the synthetic rubber component;
a reinforcing filler;
a methylene donor and a methylene acceptor reinforcing resin system; and
a sulfur curing system comprising sulfur and one or more accelerators, wherein a ratio by weight of the sulfur to the one or more accelerators is less than 1.

2. The tire of claim 1, wherein the cross-linkable rubber composition comprises between 45 phr and 65 phr of the synthetic rubber component.

3. The tire of any of the preceding claims, wherein the rubber component includes no polyisoprene.

4. The tire of any of the preceding claims, wherein the cross-linkable rubber composition further comprises between 40 phr and 100 phr of a reinforcing filler.

5. The tire of claim 4, wherein the reinforcing filler is a carbon black having a nitrogen surface area of between 70 $m^2$/g and 120 $m^2$/g.

6. The tire of any of the preceding claims, wherein the cross-linkable rubber composition includes between 1 phr and 6 phr of the methylene acceptor.

7. The tire of any of the preceding claims, wherein the methylene acceptor is selected from group consisting of phenol, bisphenols, polyphenols, substituted phenols, cresol, t-butylphenol, octylphenol, nonylphenol, xylenol, resorcinol, a novolac resin and combinations thereof.

8. The tire of any of the preceding claims, wherein the methylene acceptor is the novolac resin.

9. The tire of any of the preceding claims, wherein the methylene donor is selected from the group consisting of hexamethylenetetramine (HMT), hexamethoxymethylmelamine (HMMM) and combinations thereof.

10. The tire of any of the preceding claims, wherein the sulfur to accelerator ratio is between 0.3 and 0.6.

11. The tire of any of the preceding claims, wherein the cross-linkable rubber composition further comprises a protection package comprising between 8 phr and 11 phr of one or more antioxidants.

12. The tire of claim 11, wherein the one or more antioxidants are 6PPH and TMQ.

13. The tire of any of the preceding claims, wherein the cross-linkable rubber composition further comprises between 1 phr and 2 phr of stearic acid.

14. The tire of any of the preceding claims, wherein a modulus of elongation of the rubber composition measured at 23 °C at 10% strain (MA10) is between 6.5 MPa and 9 MPa and a modulus of elongation measured at 23 °C at 100% strain (MA100) is between 1 MPa and 2.5 MPa measured according to ASTM Standard D412.

15. The tire of any of the preceding claims, wherein the rubber composition includes only the NR and the synthetic rubber component as rubber components.

16. The tire of any of the preceding claims, wherein the tire is a heavy truck tire.

**Patentansprüche**

1. Reifen, der eine radiale Richtung, eine axiale Richtung und eine Umfangsrichtung aufweist, wobei der Reifen umfasst:

ein Paar von gegenüberliegenden Wulstabschnitten;
ein Paar von gegenüberliegenden Seitenwandabschnitten, die mit den gegenüberliegenden Wulstabschnitten verbunden sind;
einen Kronenteil, der die gegenüberliegenden Seitenwandteile verbindet;
mindestens eine Karkasse, die sich zwischen den Wulstabschnitten und durch die Seitenwand- und Kronenabschnitte erstreckt; und
ein Paar von Schutzeinrichtungen für den Sturz, die um mindestens einen radial inneren Abschnitt jedes der Wulstabschnitte angeordnet sind und sich radial nach außen in Richtung der Seitenwandteile erstrecken, wobei die Schutzeinrichtungen für den Sturz aus einer Kautschukzusammensetzung auf der Basis einer vernetzbaren Kautschukzusammensetzung gebildet sind, wobei die vernetzbare Kautschukzusammensetzung in Gewichtsteilen pro 100 Gewichtsteile Kautschuk (phr) umfasst:

zwischen 40 phr und 70 phr Naturkautschuk;
zwischen 30 phr und 60 phr einer synthetischen Kautschukkomponente, ausgewählt aus der Gruppe, die aus einem Polybutadien-Kautschuk (BR), einem StyrolButadien-Kautschuk (SBR), einem Polyisopren-Kautschuk (IR) und Kombinationen davon besteht, wobei die synthetische Kautschukkomponente den BR in einer Menge enthält, die zwischen 25 Gew.-% und 100 Gew.-% des Gesamtgewichts der synthetischen Kautschukkomponente liegt;
einen Verstärkerfüllstoff;
ein Methylendonator- und ein Methylenakzeptor-Verstärkungsharzmaterial; und
ein Schwefelaushärtungssystem, das Schwefel und einen oder mehrere Beschleuniger umfasst, wobei das Gewichtsverhältnis zwischen dem Schwefel und dem einen oder den mehreren Beschleunigern weniger als 1 beträgt.

2. Reifen nach Anspruch 1, wobei die vernetzbare Kautschukzusammensetzung zwischen 45 phr und 65 phr der synthetischen Kautschukkomponente umfasst.

3. Reifen nach einem der vorhergehenden Ansprüche, wobei die Gummikomponente kein Polyisopren enthält.

4. Reifen nach einem der vorhergehenden Ansprüche, wobei die vernetzbare Kautschukzusammensetzung ferner zwischen 40 phr und 100 phr eines Verstärkungsfüllstoffs enthält.

5. Reifen nach Anspruch 4, wobei es sich bei dem Verstärkungsfüllstoff um einen Ruß mit einer Stickstoffoberfläche zwischen 70 m$^2$/g und 120 m$^2$/g handelt.

6. Reifen nach einem der vorhergehenden Ansprüche, wobei die vernetzbare Kautschukzusammensetzung zwischen 1 phr und 6 phr des Methylenakzeptors enthält.

7. Reifen nach einem der vorhergehenden Ansprüche, wobei der Methylenakzeptor ausgewählt ist aus der Gruppe bestehend aus Phenol, Bisphenolen, Polyphenolen, substituierten Phenolen, Kresol, t-Butylphenol, Octylphenol, Nonylphenol, Xylenol, Resorcin, einem Novolakharz und Kombinationen davon.

8. Reifen nach einem der vorhergehenden Ansprüche, wobei der Methylenakzeptor das Novolakharz ist.

9. Reifen nach einem der vorhergehenden Ansprüche, wobei der Methylendonator ausgewählt ist aus der Gruppe bestehend aus Hexamethylentetramin (HMT), Hexamethoxymethylmelamin (HMMM) und Kombinationen davon.

10. Reifen nach einem der vorhergehenden Ansprüche, wobei das Verhältnis von Schwefel zum Beschleuniger zwischen 0,3 und 0,6 liegt.

11. Reifen nach einem der vorhergehenden Ansprüche, wobei die vernetzbare Kautschukzusammensetzung außerdem ein Schutzpaket umfasst, das zwischen 8 phr und 11 phr eines oder mehrerer Antioxidantien enthält.

12. Reifen nach Anspruch 11, wobei das eine Antioxidans oder die mehreren Antioxidantien 6PPH und TMQ sind.

**13.** Reifen nach einem der vorhergehenden Ansprüche, wobei die vernetzbare Kautschukzusammensetzung ferner zwischen 1 phr und 2 phr Stearinsäure enthält.

**14.** Reifen nach einem der vorhergehenden Ansprüche, wobei ein bei 23 °C bei 10 % Dehnung (MA10) gemessener Dehnungsmodul der Kautschukzusammensetzung zwischen 6,5 MPa und 9 MPa und ein bei 23 °C bei 100 % Dehnung (MA100) gemessener Dehnungsmodul zwischen 1 MPa und 2,5 MPa liegen, gemessen nach ASTM-Standard D412.

**15.** Reifen nach einem der vorhergehenden Ansprüche, wobei die Kautschukzusammensetzung nur die Naturkautschuk- und die synthetische Kautschukkomponente als Kautschukkomponenten enthält.

**16.** Reifen nach einem der vorhergehenden Ansprüche, wobei der Reifen ein schwerer Lkw-Reifen ist.

**Revendications**

**1.** Pneu définissant une direction radiale, une direction axiale et une direction circonférentielle, le pneu comprenant :

une paire de parties de talon opposées ;
une paire de parties de paroi latérale opposées reliées aux parties de talon opposées ;
une partie de couronne reliant les parties de paroi latérale opposées ;
au moins une carcasse s'étendant entre les parties de talon et à travers les parties de paroi latérale et de couronne ; et
une paire de protections anti-pincement positionnées autour d'au moins une section radialement la plus à l'intérieur de chacune des parties de talon et s'étendant radialement vers l'extérieur vers les parties de paroi latérale, dans lequel les protections anti-pincement sont formées d'une composition de caoutchouc à base d'une composition de caoutchouc réticulable, la composition de caoutchouc réticulable comprenant, en parties en poids pour 100 parties en poids de caoutchouc (phr) :

entre 40 phr et 70 phr de caoutchouc naturel ;
entre 30 phr et 60 phr d'un composant de caoutchouc synthétique choisi dans le groupe constitué d'un caoutchouc polybutadiène (BR), d'un caoutchouc butadiènestyrène (SBR), d'un caoutchouc polyisoprène (IR) et de combinaisons de ceux-ci, dans lequel le composant de caoutchouc synthétique comporte le BR en une quantité qui est comprise entre 25 % en poids et 100 % en poids du poids total du composant de caoutchouc synthétique ;
une charge renforçante ;
un donneur de méthylène et un système de résine de renforcement accepteur de méthylène ; et
un système de durcissement au soufre comprenant du soufre et un ou plusieurs accélérateurs, dans lequel un rapport en poids du soufre aux uns ou plusieurs accélérateurs est inférieur à 1.

**2.** Pneu selon la revendication 1, dans lequel la composition de caoutchouc réticulable comprend entre 45 phr et 65 phr du composant de caoutchouc synthétique.

**3.** Pneu selon l'une quelconque des revendications précédentes, dans lequel le composant de caoutchouc ne comporte pas de polyisoprène.

**4.** Pneu selon l'une quelconque des revendications précédentes, dans lequel la composition de caoutchouc réticulable comprend en outre entre 40 phr et 100 phr d'une charge renforçante.

**5.** Pneu selon la revendication 4, dans lequel la charge renforçante est un noir de carbone ayant une surface d'azote comprise entre 70 m$^2$/g et 120 m$^2$/g.

**6.** Pneu selon l'une quelconque des revendications précédentes, dans lequel la composition de caoutchouc réticulable comporte entre 1 phr et 6 phr de l'accepteur de méthylène.

**7.** Pneu selon l'une quelconque des revendications précédentes, dans lequel l'accepteur de méthylène est choisi dans le groupe constitué d'un phénol, de bisphénols, de polyphénols, de phénols substitués, d'un crésol, d'un t-butylphénol, d'un octylphénol, d'un nonylphénol, d'un xylénol, d'un résorcinol, d'une résine novolaque et de combinaisons de ceux-ci.

8. Pneu selon l'une quelconque des revendications précédentes, dans lequel l'accepteur de méthylène est la résine novolaque.

9. Pneu selon l'une quelconque des revendications précédentes, dans lequel le donneur de méthylène est choisi dans le groupe constitué de l'hexaméthylènetétramine (HMT), de l'hexaméthoxyméthylmélamine (HMMM) et de combinaisons de celles-ci.

10. Pneu selon l'une quelconque des revendications précédentes, dans lequel le rapport du soufre à l'accélérateur est compris entre 0,3 et 0,6.

11. Pneu selon l'une quelconque des revendications précédentes, dans lequel la composition de caoutchouc réticulable comprend en outre un conditionnement de protection comprenant entre 8 phr et 11 phr d'un ou de plusieurs oxydants.

12. Pneu selon la revendication 11, dans lequel les uns ou plusieurs oxydants sont 6PPH et TMQ.

13. Pneu selon l'une quelconque des revendications précédentes, dans lequel la composition de caoutchouc réticulable comprend en outre entre 1 phr et 2 phr d'acide stéarique.

14. Pneu selon l'une quelconque des revendications précédentes, dans lequel un module d'allongement de la composition de caoutchouc mesuré à 23 °C à une contrainte de 10 % (MA10) est compris entre 6,5 MPa et 9 MPa et un module d'allongement mesuré à 23 °C à une contrainte de 100 % (MA100) est compris entre 1 MPa et 2,5 MPa mesurés selon la norme ASTM D412.

15. Pneu selon l'une quelconque des revendications précédentes, dans lequel la composition de caoutchouc comporte uniquement le NR et le composant de caoutchouc synthétique en tant que composants de caoutchouc.

16. Pneu selon l'une quelconque des revendications précédentes, dans lequel le pneu est un pneu pour poids lourd.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3040212 A
- KR 20120117629
- EP 2878458 A